# EUROPEAN PATENT APPLICATION

(11) **EP 3 144 193 A1**
(43) Date of publication of application: **22.03.2017**
(21) Application number: 15792799.7
(22) Date of filing: 17.04.2015
(51) Int. Cl.: B60T 8/34

(54) **ABS HYDRAULIC UNIT**

(30) Priority: 16.05.2014 JP 2014102053
(71) Applicant: Robert Bosch GmbH, 70442 Stuttgart (DE)
(72) Inventor: SAGAYAMA Kosaku, Yokohama-shi Kanagawa 224-8501 (JP)
(86) International application number: PCT/JP2015/061812
(87) International publication number: WO 2015/174209

(57) **Abstract**

Provided is a miniaturized ABS hydraulic unit which can be manufactured at a low cost. An ABS hydraulic unit for performing an antilock brake control of a hydraulic brake includes: a pump and a valve mounted in a hydraulic circuit for making the hydraulic brake perform braking; a motor for operating the pump; a block into which the pump and the valve are assembled and in which a pipe passage where a brake liquid of the hydraulic circuit flows is formed; and a control circuit board for controlling the motor and the valve, wherein the control circuit board is arranged in an extending manner toward a direction that the motor and the valve are assembled into the block.

## Description

### Technical Field

The present invention relates to an ABS hydraulic unit for performing an antilock brake control of a hydraulic brake.

### Background Art

Conventionally, there has been known an ABS hydraulic unit for performing an antilock brake control of a hydraulic brake (see PTL 1, for example). In this type of ABS hydraulic unit, pumps, valves and the like are assembled into a block in which a pipe passage through which a brake fluid for a hydraulic circuit flows is formed. Accordingly, a control circuit board for controlling these pumps, valves and the like is arranged in a state where the control circuit board covers the valves and the like so as to sandwich the valves and the like between the control circuit board and the block, and is electrically connected to these valves.

### Citation List

### Patent Literature

PTL 1: JP-A-2002-370635

### Summary of Invention

### Technical Problem

However, in the above-mentioned ABS hydraulic unit pertaining to the related art, when a part larger than a valve such as a motor, for example, is arranged on a mounting surface of the block on which the control circuit board is mounted, it is necessary to arrange the control circuit board away from the block by an amount of a height of the part. Further, for example, when a connector is connected in the in-plane direction of the control circuit board, a gap for the connecter to be connected to get access to a connecter on a control circuit board side is necessary and hence, it is necessary to arrange the control circuit board away from the block by an amount of the gap. Accordingly, the ABS hydraulic unit is large-sized so that a manufacturing cost of the ABS hydraulic unit is pushed up.

It is an object of the invention to provide a miniaturized ABS hydraulic unit which can overcome the above-mentioned drawbacks that the related art has at a low cost.

### Solution to Problem

The invention is directed to an ABS hydraulic unit for performing an antilock brake control of a hydraulic brake, the ABS hydraulic unit including: a pump and a valve mounted in a hydraulic circuit for making the hydraulic brake perform braking; a motor for operating the pump; a block into which the pump and the valve are assembled and in which a pipe passage where a brake liquid of the hydraulic circuit flows is formed; and a control circuit board for controlling the motor and the valve, wherein the control circuit board is arranged in an extending manner toward a direction that the motor and the valve are assembled into the block.

In the ABS hydraulic unit having such a constitution, the valve may be arranged between the motor and the control circuit board. The ABS hydraulic unit may further include a housing which covers the motor and the valve, wherein a portion of the housing which covers the valve may be formed with a thickness smaller than a thickness of a portion of the housing which covers the motor in a direction extending toward the block. The motor may be configured to be operated by the pump by way of a planetary gear mechanism. The control circuit board may be electrically connected to at least one of the motor and the valve through a flexible wire. A surface of the block on a side opposite to a connection surface where the pipe passage is connected to an external device may be formed of an inclined surface such that the inclined surface is disposed in an inclined manner with respect to the connection surface. The block includes a second hydraulic circuit different from the hydraulic circuit, and a second valve mounted in the second hydraulic circuit is assembled such that the motor is positioned between the control circuit board and the second valve.

### Advantageous Effects of Invention

According to the invention, it is possible to realize a miniaturized ABS hydraulic unit at a low cost.

### Brief Description of Drawings

[Fig. 1] Fig. 1 is a circuit diagram showing a hydraulic circuit of an ABS hydraulic unit according to a first embodiment.
[Fig. 2] Fig. 2 is a block diagram showing the functional constitution formed by an ECU according to the fist embodiment.
[Fig. 3] Fig. 3 is a perspective view showing the ABS hydraulic unit according to the first embodiment.
[Fig. 4] Fig. 4 is a perspective view showing the ABS hydraulic unit according to the first embodiment in a state where a housing is removed from the ABS hydraulic unit.
[Fig. 5] Fig. 5 is a side view showing the ABS hydraulic unit according to the first embodiment in a state where the housing is removed from the ABS hydraulic unit.
[Fig. 6] Fig. 6 is a cross-sectional view showing a planetary gear mechanism according to the first embodiment and an area near the planetary gear mechanism.
[Fig. 7] Fig. 7 is a side view showing the ABS hydraulic unit according to the first embodiment.
[Fig. 8] Fig. 8 is a perspective view showing an ABS hydraulic unit according to a second embodiment.
[Fig. 9] Fig. 9 is a top view showing the ABS hydraulic unit according to the second embodiment in a state where a housing is removed from the ABS hydraulic unit.
[Fig. 10] Fig. 10 is a side view showing the ABS hydraulic unit according to the second embodiment in a state where a housing is removed from the ABS hydraulic unit. Description of Embodiments

Hereinafter, preferred embodiments of the invention are explained with reference to drawings.

### [1] First embodiment

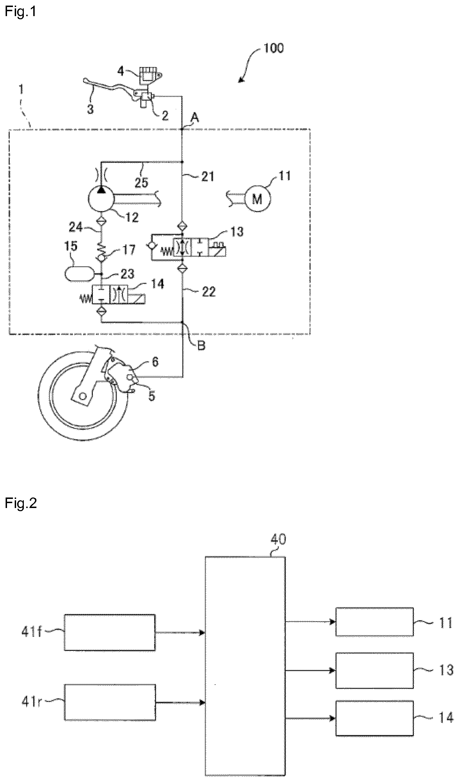

Fig. 1 is a circuit diagram showing a hydraulic circuit of an ABS hydraulic unit according to this embodiment. In a motorcycle according to this embodiment, an ABS (antilock braking system) is mounted only on a front wheel so that the ABS hydraulic unit 100 can perform an antilock brake control only with respect to the front wheel. Hereinafter, a hydraulic circuit 1 for the front wheel is explained.

The hydraulic circuit 1 is filled with a brake fluid, and is connected to a master cylinder 2 at a connection end A thereof. A brake lever 3 is mounted on the master cylinder 2, and the master cylinder 2 is connected to a reservoir 4. Due to such a constitution, when a rider manipulates the brake lever 3 so as to make a brake of the front wheel perform braking, the master cylinder 2 discharges a brake fluid accumulated in the reservoir 4 to the hydraulic circuit 1.

On the other hand, the hydraulic circuit 1 is connected to a wheel cylinder 5 at a connection end B thereof. The wheel cylinder 5 is mounted in a brake caliper 6 of the front wheel. The brake caliper 6 is operated along with the increase of a fluid pressure in the wheel cylinder 5 and applies a braking force to the front wheel.

The hydraulic circuit 1 connected between the master cylinder 2 and the wheel cylinder 5 includes: a motor 11; a pump 12; an inlet valve (valve) 13; an outlet valve (valve) 14; and an accumulator 15.

The inlet valve 13 is an electromagnetic valve provided with a solenoid. The inlet valve 13 is connected to the connection end A through a first pipe 21, and is also connected to the connection end B and the outlet valve 14 through a second pipe 22. The second pipe 22 is bifurcated in the middle thereof and hence, the second pipe 22 is connected to the inlet valve 13, the connection end B, and the outlet valve 14. The inlet valve 13 is connected to the first pipe 21 and the second pipe 22 by way of a filter respectively. A check valve is connected to the inlet valve 13 in parallel between two filters. The check valve does not allow the flow of a brake fluid from the first pipe 21 into the second pipe 22 but allows the flow of a brake fluid from the second pipe 22 into the first pipe 21 even when the inlet valve 13 is closed. The inlet valve 13 is provided for controlling the flow of a brake fluid from the first pipe 21 to the second pipe 22 due to opening or closing of the inlet valve 13.

The outlet valve 14 is an electromagnetic valve provided with a solenoid. The outlet valve 14 is connected to the inlet valve 13 and the connection end B through the second pipe 22, and is connected to the accumulator 15 through a third pipe 23. The outlet valve 14 is connected to the second pipe 22 by way of a filter. The outlet valve 14 is provided for controlling the flow of a brake fluid from the second pipe 22 into the third pipe 23 due to opening or closing of the outlet valve 14.

The accumulator 15 is connected to the outlet valve 14 through the third pipe 23, and is connected to a suction side of the pump 12 through a fourth pipe 24. The accumulator 15 is connected to the fourth pipe 24 by way of a check valve 17. Due to the provision of the check valve 17, when a fluid pressure of a brake fluid exceeds a predetermined pressure, it is always the case that the brake fluid can flow from the accumulator 15 into the fourth pipe 24 but cannot flow from the fourth pipe 24 into the accumulator 15. The accumulator 15 is provided for accumulating a brake fluid which flows into the accumulator 15 from the third pipe 23, and discharges an accumulated brake fluid into the fourth pipe 24.

The pump 12 is connected to the accumulator 15 through the fourth pipe 24, and is connected to the first pipe 21 through a fifth pipe 25. The pump 12 is connected to the fourth pipe 24 by way of a filter, and is connected to the fifth pipe 25 by way of a throttle. The pump 12 is operated when the motor 11 which is a DC motor is driven, and sucks a brake fluid from the fourth pipe 24 disposed at a suction side, and discharges the brake fluid sucked into the fifth pipe 25 disposed at a discharge side.

Fig. 2 is a block diagram showing the functional constitution formed by the ECU.

The ECU 40 controls the driving of the motor 11, an opening state or a closing state of the inlet valve 13, an opening state or a closing state of the outlet valve 14 and the like based on a rotational speed signal which the ECU 40 receives from a speed sensor 41f which detects a rotational speed of the front wheel and outputs a rotational speed signal corresponding to the detected rotational speed, and a rotational speed signal which the ECU 40 receives from a speed sensor 41r which detects a rotational speed of the rear wheel and outputs a rotational speed signal corresponding to the detected rotational speed.

In a usual braking state, the ECU 40 stops the driving of the motor 11 so that the inlet valve 13 is held in an open state and the outlet valve 14 is held in a closed state. Due to such an operation, when a rider manipulates the brake lever 3 so that a pressure of a brake fluid is increased by the master cylinder 2 (see Fig. 1), the increase of the pressure of the brake fluid is transmitted to the wheel cylinder 5 (see Fig. 1) through the first pipe 21 (see Fig. 1), the inlet valve 13, and the second pipe 22(see Fig. 1). Accordingly, the brake caliper 6 (see Fig. 1) is operated in an interlocking manner with the manipulation of the brake lever 3 (see Fig. 1) by the rider so that a braking force is applied to the front wheel.

At the time of performing braking where a braking force is generated by the brake caliper 6, the ECU 40 repeatedly determines whether or not the front wheel is in a locked state, that is, whether or not the front wheel excessively slips on a road surface based on rotational speed signals acquired from the speed sensors 41f, 41r. When the ECU 40 determines that the front wheel is in a locked state, the ECU 40 closes the inlet valve 13, opens the outlet valve 14, and operates the pump 12 by driving the motor 11 thus performing a control so as to lower a fluid pressure of a brake fluid transmitted to the wheel cylinder 5 by opening or closing the inlet valve 13 and the outlet valve 14. Due to such an operation, the ECU 40 controls a braking force of the brake caliper 6 by an antilock brake control thus releasing a locked state of the front wheel.

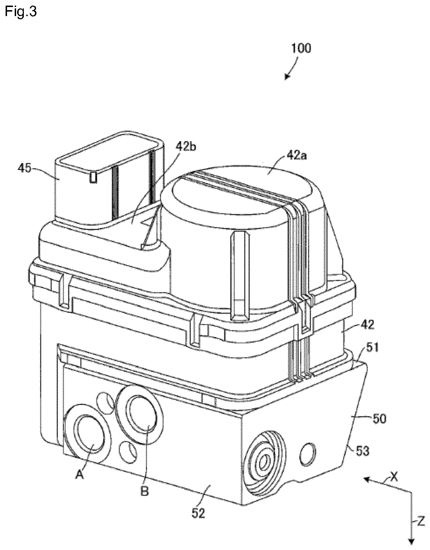

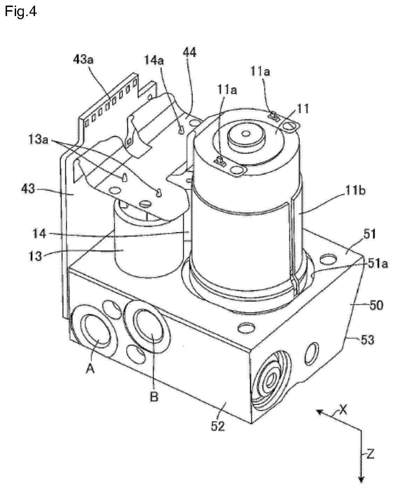

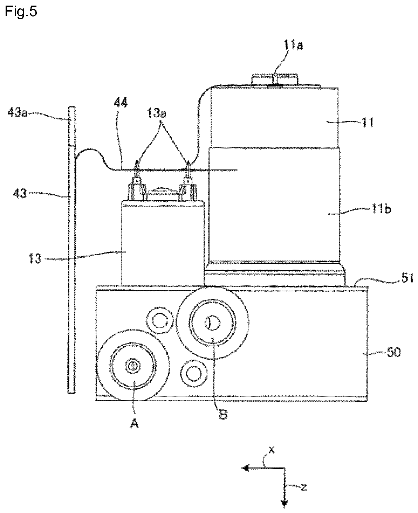

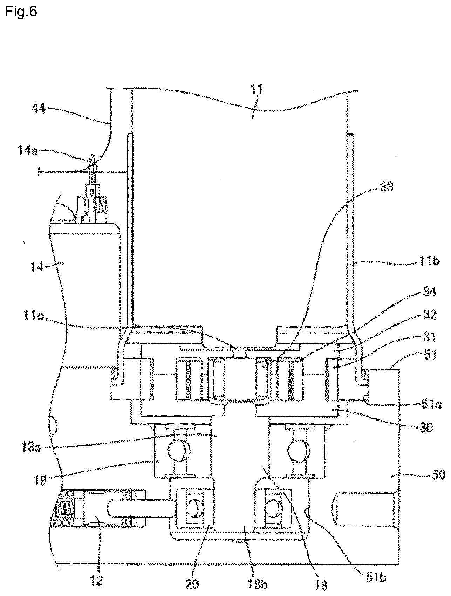

Fig. 3 is a perspective view showing the ABS hydraulic unit, Fig. 4 is a perspective view showing the ABS hydraulic unit in a state where the housing is removed from the ABS hydraulic unit, Fig. 5 is a side view showing the ABS hydraulic unit in a state where the housing is removed from the ABS hydraulic unit, and Fig. 6 is a cross-sectional view showing a planetary gear mechanism and an area near the planetary gear mechanism.

As shown in Fig. 3, the ABS hydraulic unit 100 is constituted by combining a housing 42 in which the ECU 40 (see Fig. 2) is housed and a block 50 to each other.

The block 50 is made of aluminum. The block 50 includes the hydraulic circuit 1 (see Fig. 1) in the inside thereof. That is, a pipe passage formed of the first pipe 21 to the fifth pipe 25 though which a brake fluid flows are formed in the block 50. On a pipe connecting surface 52 of the block 50 which is disposed approximately orthogonal to a housing mounting surface 51 on which the housing 42 is mounted, the connection end A and the connection end B are formed. The pump 12 and the accumulator 15 (see Fig. 1) are also assembled into the block 50.

The housing 42 is mounted on the housing mounting surface 51 of the block 50, and the housing 42 covers the control circuit board 43, the motor 11, the inlet valve 13 and the outlet valve 14 (see Fig. 4). A connector 45 for electrically connecting the control circuit board 43 to an external device is mounted on the housing 42 in a projecting manner in the direction away from the block 50 in a state where the housing 42 is mounted on the block 50. The connector 45 is assembled such that a connector (not shown in the drawing) which is connected to the connector 45 covers the outer periphery of the connector 45.

The housing 42 is formed such that a thickness of a portion 42a of the housing 42 which covers the motor 11 (see Fig. 6) is substantially equal to a thickness of the connector 45 in the z direction indicated by an arrow z. On the other hand, a thickness of a portion 42b of the housing 42 which covers the inlet valve 13 and the outlet valve 14 is set smaller than the thickness of the portion 42a which covers the motor 11 in the z direction toward the block 50.

As shown in Fig. 4, the ABS hydraulic unit 100 is configured such that the motor 11, the inlet valve 13, the outlet valve 14, and the control circuit board 43 are exposed when the housing 42 is removed from the block 50. In the housing mounting surface 51 of the block 50, holes are formed in the direction perpendicular to the housing mounting surface 51, that is, in the z direction. The motor 11, the inlet valve 13 and the outlet valve 14 are assembled into the holes. The inlet valve 13 and the outlet valve 14 are arranged between the motor 11 and the control circuit board 43, and the motor 11, the inlet valve 13 and the outlet valve 14 are assembled approximately perpendicular to the housing mounting surface 51 of the block 50.

The control circuit board 43 on which a CPU, a memory and the like are mounted constitutes the ECU 40, and the control circuit board 43 controls the ABS hydraulic unit 100. The control circuit board 43 has a connector portion 43a which is exposed to the outside in the inside of the connector 45 (see Fig. 3) when the housing 42 is mounted on the block 50. Since the control circuit board 43 has the connector portion 43a, the control circuit board 43 is connected to a connector on a vehicle body side of a motorcycle on which the ABS hydraulic unit 100 is mounted (not shown in the drawing), and the transmission and reception of various information such as a wheel speed are performed between the ABS hydraulic unit and a vehicle body side.

As shown in Fig. 5, the control circuit board 43 is arranged so as to extend along the z direction along which the motor 11, the inlet valve 13, and the outlet valve 14 (see Fig. 4) are assembled to the block 50. That is, the in-plane direction of the control circuit board 43 and the z direction along which the motor 11, the inlet valve 13 and the outlet valve 14 are assembled to the block 50 are set approximately parallel to each other.

The control circuit board 43 is electrically connected to the motor 11, the inlet valve 13, and the outlet valve 14 through a film-like flexible wire 44 having flexibility. Due to such a constitution, the control circuit board 43 can control opening/closing of the inlet valve 13 and the outlet valve 14 by energizing or deenergizing the inlet valve 13 and the outlet valve 14 and can control the rotation of the motor 11.

The flexible wire 44 has one end thereof fixed to the control circuit board 43 and hence, the flexible wire 44 is electrically connected to the control circuit board 43, while the motor 11, the inlet valve 13 and the outlet valve 14 are electrically connected to the flexible wire 44 respectively in a state where connection terminals 11a, 13a, 14a are inserted into and are engaged with the flexible wire 44.

As shown in Fig. 6, the motor 11 is assembled into a hole 51a formed in the housing mounting surface 51 of the block 50 by way of a motor cover 11b mounted along an outer periphery of the motor 11. A planetary gear mechanism 30 and an eccentric shaft 18 are assembled into the hole 51a. A drive force of the motor 11 drives the eccentric shaft 18 after a rotational speed is decreased by the planetary gear mechanism 30.

The planetary gear mechanism 30 is connected between the motor 11 and the eccentric shaft 18, and includes an inner gear 31, a planetary carrier 32, a sun gear 33, and planetary gears 34.

A rotation stopper is formed on the inner gear 31 and hence, the inner gear 31 is fixed to the block 50 in the inside of the hole 51a so that the inner gear 31 cannot be rotated. The inner gear 31 is formed in a ring shape, and a plurality of teeth are formed on and along an inner peripheral surface of the inner gear 31.

The planetary carrier 32 is formed in a disk shape, and is arranged in the inside of the inner gear 31. In the inside of the planetary carrier 32, three planetary gears 34 are mounted in a rotatable manner. The planetary gears 34 constantly mesh with the teeth formed on and along the inner peripheral surface of the inner gear 31.

On the planetary carrier 32, the sun gear 33 is arranged at the center of three planetary gears 34. In a state where the sun gear 33 is assembled into the planetary carrier 32, the sun gear 33 is brought into a state where the sun gear 33 constantly meshes with three planetary gears 34.

A hole is formed in the planetary carrier 32 in the vicinity of the axis of the planetary carrier 32, an output shaft 11c of the motor 11 extends in the inside of the planetary carrier 32 by passing through such a hole, and the sun gear 33 is assembled to the output shaft 11c of the motor 11. The sun gear 33 is fixedly mounted on the output shaft 11c such that the sun gear 33 is not rotatable relative to the output shaft 11c. That is, the sun gear 33 and the output shaft 11c are configured to be rotated integrally.

A hole is formed in the planetary carrier 32 in the vicinity of the axis of the planetary carrier 32 on an eccentric shaft 18 side, and the eccentric shaft 18 is assembled and fixed to the hole. Due to such a constitution, the eccentric shaft 18 which is assembled to the hole is configured to be rotated integrally with the planetary carrier 32.

The eccentric shaft 18 has one end thereof supported on the planetary gear mechanism 30, and a rotary shaft portion 18a of the eccentric shaft 18 which rotates coaxially with the motor 11 is supported on the block 50 by way of a bearing 19. On the other end of the eccentric shaft 18, a ball bearing 20 is mounted around an eccentric portion 18b of the eccentric shaft 18 which is a shaft disposed eccentric from the rotary shaft of the motor 11 and hence, the eccentric shaft 18 can smoothly transmit a piston action to the pump 12. The eccentric shaft 18 is rotated and transmits a piston action to the pump 12 so that the pump 12 can discharge a brake fluid to the fifth pipe 25 (see Fig. 1) of the hydraulic circuit 1 by moving the piston in a reciprocating manner.

Due to the above mentioned constitution, in the planetary gear mechanism 30, when the sun gear 33 assembled to the output shaft 11c is rotated by a drive force of the motor 11, three planetary gears 34 which mesh with the sun gear 33 are respectively rotated in the direction opposite to the rotating direction of the sun gear 33. Since three planetary gears 34 also mesh with the inner gear 31 respectively, three planetary gears 34 are moved along the inner peripheral surface of the inner gear 31 along with the rotation of the planetary gears 34. At this stage of operation, three planetary gears 34 are moved while being rotated in the inside of the inner gear 31 in the same direction as the rotating direction of the sun gear 33. Since three planetary gears 34 are assembled into the planetary carrier 32, the planetary carrier 32 is moved while being rotated in the inside of the inner gear 31 integrally with three planetary gears 34. Due to such operations, the eccentric shaft 18 which is integrally rotated with the planetary carrier 32 is rotated in the same direction as the rotating direction of the sun gear 33. In the planetary gear mechanism 30 according to this embodiment, a speed reduction rate is set such that a rotational output is outputted from the eccentric shaft 18 with a rotational speed which is approximately 1/5 of a rotational speed of the output shaft 11c of the motor 11, and the output is outputted from the eccentric shaft 18 with a torque which is approximately 5 times larger than a torque of the output shaft 11c of the motor 11. That is, for example, when the motor 11 is rotated at 15000rpm (rotation per minute), the output shaft 11c is rotated at 3000rpm, while when the motor 11 is rotated at 20000rpm, the output shaft 11c is rotated at 4000rpm. The torque which is 10N·cm at the output shaft 11c of the motor 11 becomes 50N·cm at the eccentric shaft 18.

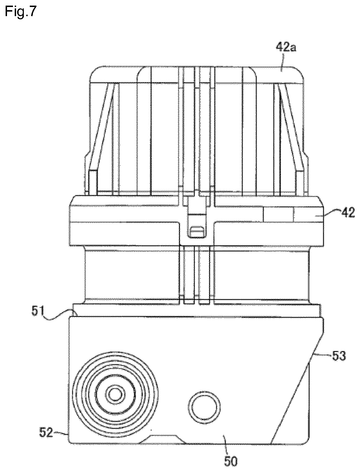

Fig. 7 is a side view showing the ABS hydraulic unit. Fig. 7 is a view showing the ABS hydraulic unit 100 as viewed in the direction x indicated by an arrow x in Fig. 3.

In this embodiment, as shown in Fig. 6, an outer diameter of the bearing 19 is set smaller than an outer diameter of the planetary gear mechanism 30, and a diameter of a space 51b in which the ball bearing 20 moves while being rotated is set smaller than the outer diameter of the bearing 19. Due to such a constitution, as shown in Fig. 7, the block 50 is formed such that a back surface of the pipe connecting surface 52 is formed of an inclined surface 53 which is inclined with respect to the pipe connecting surface 52 and hence, the block 50 can be miniaturized whereby the block 50 can be made light-weighted.

In this embodiment, in the ABS hydraulic unit 100, the control circuit board 43 is arranged so as to extend in the z direction along which the motor 11, the inlet valve 13, and the outlet valve 14 are assembled into the block 50. Due to such a constitution, it is unnecessary to arrange the control circuit board 43 away from the housing mounting surface 51 so as to avoid the motor 11, the inlet valve 13, the outlet valve 14 and other parts and the like on the housing mounting surface 51, and the control circuit board 43 can be arranged adjacent to the block 50. Accordingly, the ABS hydraulic unit 100 can be miniaturized thus manufacturing the ABS hydraulic unit 100 at a low cost.

In this embodiment, the inlet valve 13 and the outlet valve 14 are arranged between the motor 11 and the control circuit board 43, and the housing 42 is formed such that a thickness of the portion 42b of the housing 42 which covers the inlet valve 13 and the outlet valve 14 is set smaller than a thickness of the portion 42b of the housing 42 which covers the motor 11 in the direction toward the block 50. Due to such a constitution, above the portion 42b which covers the inlet valve 13 and the outlet valve 14, a gap which allows a connector to be connected to get access to the connector on a control circuit board side or which allows fingers of an operator who connects a connector to be inserted into the gap when the connector is connected in the in-plane direction of the control circuit board 43 is formed. Accordingly, it is unnecessary to arrange the control circuit board 43 away from the block 50 in the x direction and hence, the ABS hydraulic unit 100 can be miniaturized.

Further, in this embodiment, the ABS hydraulic unit 100 is configured such that the motor 11 operates the pump 12 by way of the planetary gear mechanism 30. Due to such a constitution, the pump 12 can be driven by a small torque, and a miniaturized motor can be used and hence, the ABS hydraulic unit 100 can be miniaturized. In this case, with the use of the miniaturized motor, a current value used for driving the motor can be lowered. Further, since a current value is lowered, an area of a pin or the like of a connector for supplying power to the motor can be decreased and hence, the ABS hydraulic unit 100 can be further miniaturized and, at the same time, the flexible wire 44 can be used.

### [2] Second embodiment

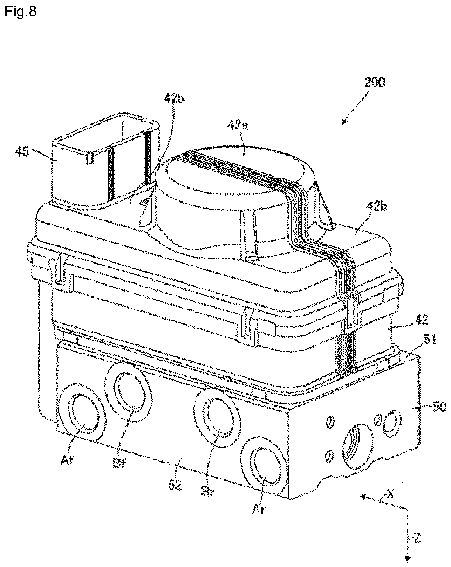

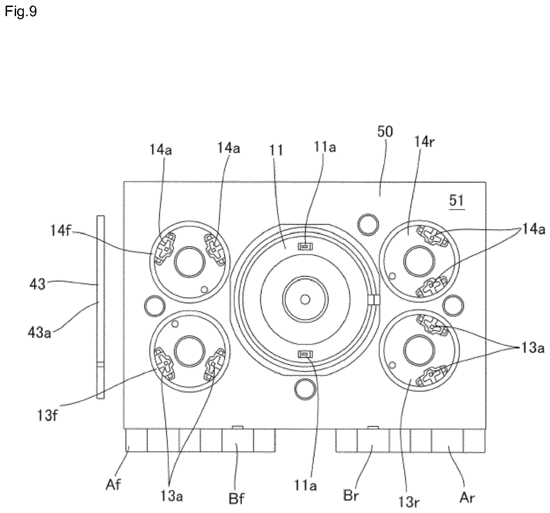

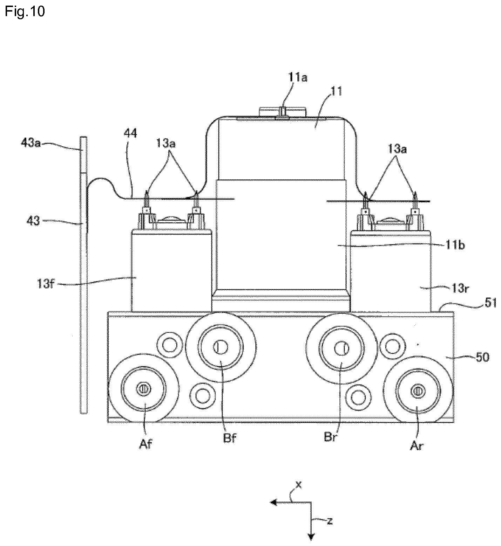

Fig. 8 is a perspective view showing an ABS hydraulic unit, Fig. 9 is a top view showing the ABS hydraulic unit seen in the z direction in a state where a housing is removed from the ABS hydraulic unit, and Fig. 10 is a side view showing the ABS hydraulic unit in a state where a housing is removed from the ABS hydraulic unit. The ABS hydraulic unit 200 according to the second embodiment differs from the ABS hydraulic unit 100 of the first embodiment with respect to the constitution where the ABS hydraulic unit 200 has a hydraulic circuit 1 in two systems. The ABS hydraulic unit 200 according to the second embodiment is applicable to a motorcycle in which an ABS is mounted on not only a front wheel but also a rear wheel. In Figs. 8 to 10, constitutional parts of the second embodiment which are substantially equal to the constitutional parts of the first embodiment are given the same symbols and their repeated explanation is omitted, and parts which make the second embodiment different from the first embodiment are explained in detail.

As shown in Fig. 8, in the ABS hydraulic unit 200, a connection end Af which is connected to a front-wheel-side master cylinder 2, a connection end Bf which is connected to a front-wheel-side wheel cylinder 5, a connection end Ar which is connected to a rear-wheel-side master cylinder 2, and a connection end Br which is connected to a rear-wheel-side wheel cylinder 5 are formed on a pipe connecting surface 52. Due to such a constitution, a block 50 is formed in a more elongated manner in the x direction than the block 50 of the first embodiment, and a housing 42 is configured such that a portion 42b of the housing 42 which covers an inlet valve 13f and an outlet valve 14f on a front wheel side and a portion 42b of the housing 42 which covers an inlet valve 13r and an outlet valve 14r on a rear wheel side are arranged with a portion 42a of the housing 42 which covers a motor 11 sandwiched therebetween.

As shown in Fig. 9, the ABS hydraulic unit 200 is configured such that the inlet valve 13f and the outlet valve 14f on a front wheel side and the inlet valve 13r and the outlet valve 14r on a rear wheel side are arranged in face symmetry with respect to the motor 11. That is, the inlet valve 13r (second valve) and the outlet valve 14r (second valve) on a rear wheel side are assembled into the block 50 such that the motor 11 is positioned between a control circuit board 43 and the inlet valve 13r and the outlet valve 14r on a rear wheel side. The row of the inlet valve 13f and the outlet valve 14f on a front wheel side and the row of the inlet valve 13r and the outlet valve 14r on a rear wheel side are substantially parallel with the control circuit board 43. The pump 10, the motor 11, a planetary gear mechanism 30 and the like are used in common by the hydraulic circuit 1 on a front wheel side and the hydraulic circuit 1 on a rear wheel side.

As shown in Fig. 10, a control circuit board 43 and a flexible wire 144 are used in common by the hydraulic circuit 1 on a front wheel side and the hydraulic circuit 1 on a rear wheel side. That is, the flexible wire 144 which is connected to the control circuit board 43 is connected to connection terminals 13a, 14a of the front-wheel-side inlet valve 13f and outlet valve 14f, a connection terminal 11a of the motor 11, and connection terminals 13a, 14a of the rear-wheel-side inlet valve 13r and outlet valve 14r in this order. In this embodiment, the connection circuit board 43 is arranged adjacent to the inlet valve 13f and outlet valve 14f on a front wheel side. However, the control circuit board 43 may be arranged adjacent to the inlet valve 13r and outlet valve 14r on a rear wheel side.

Although the invention has been explained based on the embodiments heretofore, the invention is not limited to the embodiments. For example, in the first embodiment, the ABS hydraulic unit 100 of one channel is configured to perform an ABS control only with respect to the front wheel. However, the invention is not limited to such an embodiment. For example, the ABS hydraulic unit 100 may be configured to perform an ABS control only with respect to a rear wheel by being connected to a master cylinder of a brake pedal and a wheel cylinder of the rear wheel.

### Reference Signs List

- 1:: hydraulic circuit
- 2:: master cylinder
- 3:: brake lever
- 4:: reservoir
- 5:: wheel cylinder
- 6:: brake caliper (hydraulic brake)
- 11:: motor
- 11a:: connection terminal
- 11b:: motor cover
- 11c:: output shaft
- 12:: pump
- 13:: inlet valve (valve)
- 13a:: connection terminal
- 14:: outlet valve (valve)
- 14a:: connection terminal
- 15:: accumulator
- 17:: check valve
- 18:: eccentric shaft
- 18a:: rotary shaft portion
- 18b:: eccentric portion
- 19:: bearing
- 20:: ball bearing
- 21:: first pipe
- 22:: second pipe
- 23:: third pipe
- 24:: fourth pipe
- 25:: fifth pipe
- 30:: planetary gear mechanism
- 31:: inner gear
- 32:: planetary carrier
- 33:: sun gear
- 34:: planetary gear
- 40:: ECU
- 41f:: speed sensor
- 41r:: speed sensor
- 42:: housing
- 42a:: portion which covers pump
- 42b:: portion which covers valve
- 43:: control circuit board
- 43a:: connector portion
- 44:: flexible wire
- 45:: connector
- 50:: block
- 51:: housing mounting surface
- 51a:: hole
- 51b:: space
- 52:: pipe connecting surface
- 53:: inclined surface
- 100:: ABS hydraulic unit

## Claims

1. An ABS hydraulic unit for performing an antilock brake control of a hydraulic brake, the ABS hydraulic unit comprising:
a pump and a valve mounted in a hydraulic circuit for making the hydraulic brake perform braking;
a motor for operating the pump;
a block into which the pump and the valve are assembled and in which a pipe passage where a brake liquid of the hydraulic circuit flows is formed; and
a control circuit board for controlling the motor and the valve,
wherein the control circuit board is arranged in an extending manner toward a direction that the motor and the valve are assembled into the block.

2. The ABS hydraulic unit according to claim 1, wherein the valve is arranged between the motor and the control circuit board.

3. The ABS hydraulic unit according to claim 1 or 2, further comprising a housing which covers the motor and the valve, wherein a portion of the housing which covers the valve is formed with a thickness smaller than a thickness of a portion of the housing which covers the motor in a direction extending toward the block.

4. The ABS hydraulic unit according to any one of claims 1 to 3, wherein the motor is configured to be operated by the pump by way of a planetary gear mechanism.

5. The ABS hydraulic unit according to any one of claims 1 to 4, wherein the control circuit board is electrically connected to at least one of the motor and the valve through a flexible wire.

6. The ABS hydraulic unit according to any one of claims 1 to 5, wherein a surface of the block on a side opposite to a connection surface where the pipe passage is connected to an external device is formed of an inclined surface such that the inclined surface is disposed in an inclined manner with respect to the connection surface.

7. The ABS hydraulic unit according to any one of claims 1 to 6,
wherein the block includes a second hydraulic circuit different from the hydraulic circuit, and
a second valve mounted in the second hydraulic circuit is assembled such that the motor is positioned between the control circuit board and the second valve.
